**Europäisches Patentamt**

**European Patent Office**

**Office européen des brevets**

(19)

(11) Veröffentlichungsnummer : **0 481 165 B1**

(12)

# EUROPÄISCHE PATENTSCHRIFT

(45) Veröffentlichungstag der Patentschrift :
**21.04.93 Patentblatt 93/16**

(51) Int. Cl.[5] : **C03C 3/062,** C03C 3/17, C03C 4/08

(21) Anmeldenummer : **91110464.4**

(22) Anmeldetag : **25.06.91**

(54) **Kupfer (II)-oxidhaltiges Alumophosphatglas.**

(30) Priorität : **05.10.90 DE 4031469**

(43) Veröffentlichungstag der Anmeldung :
**22.04.92 Patentblatt 92/17**

(45) Bekanntmachung des Hinweises auf die
Patenterteilung :
**21.04.93 Patentblatt 93/16**

(84) Benannte Vertragsstaaten :
**DE FR GB IT NL**

(56) Entgegenhaltungen :
**DD-A- 153 202**
**DE-B- 2 926 721**
**US-A- 4 229 220**
**PATENT ABSTRACTS OF JAPAN vol. 13, no.
579 (C-668)(3927) 20. Dezember 1989 & JP-A-1
242 440 ( TOSHIBA GLASS CO LTD ) 27. September 1989**

(73) Patentinhaber : **Schott Glaswerke**
**Hattenbergstrasse 10**
**W-6500 Mainz 1 (DE)**
(84) **DE FR IT NL**
Patentinhaber : **Carl-Zeiss-Stiftung trading as**
**SCHOTT GLASWERKE**
**Hattenbergstrasse 10**
**W-6500 Mainz 1 (DE)**
(84) **GB**

(72) Erfinder : **Speit, Burkhard, Dr.**
**Pliniusweg 20**
**W-6500 Mainz (DE)**
Erfinder : **Karnehm, Ansgar**
**Beire-1e-Chatel-Strasse 10**
**W-6501 Saulheim (DE)**
Erfinder : **Winkler-Trudewig, Magdalena**
**Am Kirchborn 20B**
**W-6500 Mainz (DE)**

**Beschreibung**

Gegenstand der Erfindung sind Kupfer (II) -oxid-haltige Alumophosphatgläser mit niedriger Transmission im Infrarotbereich.

Derartige Gläser finden z.B. Verwendung als Farbkorrektionsfilter in Farbvideokameras, als Abdeckung von beleuchteten farbigen Displays (z.B. in Flugzeugkanzeln), als Falschlichtfilter in Monochromatoren, als Verlaufsfilter, als anorganischer Bestandteil im Kunststoffverbundfiltern oder als Schutzbrillenglas.

Die Gläser sollen eine möglichst hohe Transparenz im nahen UV-Bereich und im sichtbaren Bereich des Lichts (ca. 400 - 625 nm) und eine möglichst niedrige Transparenz im IR-Bereich (oberhalb ca. 625 nm) besitzen. Dabei soll das Glas weitgehend farbneutral sein. Die Witterungsbeständigkeit in feuchter Luft soll gewährleisten, daß die spektrale Durchlässigkeitscharakteristik unverändert bleibt. Insbesondere für die industrielle Fertigung großflächiger Filter ist eine niedrige thermische Ausdehnung erforderlich.

Es sind bereits eine große Anzahl derartiger Gläser beschrieben. In DE 29 08 697 B2 ist ein hoch Bariumoxid-haltiges Glas beschrieben, bei dem allerdings der $Al_2O_3$-Gehalt niedrig gehalten werden muß, was einen negativen Einfluß auf die Witterungsbeständigkeit hat. DE 32 29 442 A1 beschreibt ein Phosphatglas auf der Basis $P_2O_5$/$Sb_2O_3$/Erdalkali- + Zinkoxid. Der hohe Gehalt an $Sb_2O_3$ und Erdalkalioxiden hat den Nachteil, daß, bedingt durch den hohen Brechwert dieser Gläser, größere Streulichtverluste im Passbereich dieser Filter in Kauf genommen werden müssen. Vor allem durch die Erdalkalioxide SrO und BaO wird darüber hinaus die Witterungsbeständigkeit drastisch reduziert.

JP-PS 59 15 102, JP-OS 60 23 57 40 und JP-PS 61 59 256 beschreiben Gläser mit ebenfalls hohem Erdalkalioxid (+ ZnO)-Gehalt, wobei bei den beiden ersteren der $B_2O_3$-Anteil relativ niedrig liegt, was zur Anhebung der Transformationstemperatur (Tg) führt. Diese Gläser mit starker Viskositätsänderung im kleinen Temperaturintervall sind nur schwer zu produzieren.

JP-OS 62 15 3144 und JP-OS 62 12 89 43 beschreiben alkalifreie Gläser, die sich nicht einfach schmelzen lassen. Schließlich beschreiben noch JP-OS 57 149 845 und JP-OS 63 25 245 Phosphatgläser, die einen Gehalt an $Fe_2O_3$ bzw. $SnO_2$ aufweisen.

Obwohl, wie ersichtlich, bereits zahlreiche CuO-haltige Phosphatgläser existieren, beteht nach wie vor ein Bedürfnis für verbesserte Gläser und die Erfindung hat sich die Aufgabe gestellt, ein IR-absorbierendes Glas mit steiler Absorptionskante im nahen IR-Bereich mit einer niedrigen thermischen Ausdehnung und mit guter Witterungsbeständigkeit zu finden, das darüber hinaus über eine sehr gleichmäßige hohe Transmission im durchlässigen Teil verfügt.

Diese Aufgabe wird durch das in Patentanspruch 1 beschriebene Glas gelöst.

Das Glas enthält 67 bis 77 Gew.-% $P_2O_5$, bevorzugt 69 bis 75 Gew.-%. An der oberen Grenze dieses Bereichs beginnt die Witterungsbeständigkeit abzunehmen, an der unteren Grenze des Bereichs wird der Durchlaßbereich für UV-Licht eingeengt.

Als weitere wichtige Komponente enthält das Glas 8 - 13 Gew.-% $Al_2O_3$. $Al_2O_3$ verbessert die Witterungsbeständigkeit, erfordert andererseits an sich hohe Einschmelztemperaturen bei der Glasherstellung, die aber in Cu-gefärbten Phosphatgläsern das Verhältnis von $Cu^{++}$ (blau, IR-Absorption) zu $Cu^+$ (rot, UV-Absorption) zugunsten des $Cu^+$ verschieben und damit die Eignung des Glases als Infrarotfilter verschlechtern.

Durch den sorgfältig aufeinander abgestimmten Zusatz von Alkalioxiden ($R_2O$) sowie von Erdalkalioxiden und Zink (RO) in Verbindung mit $B_2O_3$ gelingt es jedoch, die Schmelztemperatur des Grundglases so weitgehend zu senken, daß dieser störende Effekt nicht mehr auftritt.

Der Gesamt-Alkalioxid-Gehalt soll zwischen 3 und 14 Gew.-% liegen, wobei die Alkalioxide $Li_2O$, $Rb_2O$ und $Cs_2O$ in Mengen von jeweils bis zu 2,5 Gew.-%, $Na_2O$ und $K_2O$ in Mengen von bis zu 6 Gew.-% bzw. bis zu 14 Gew.-% in dem Glas vorhanden sein können. Aufgrund ihres Preises werden $Li_2O$, $Rb_2O$ und $Cs_2O$, wenn überhaupt, in der Regel nur in kleinen Mengen zur Anwendung kommen, da sich mit den beiden preiswerten Oxiden $Na_2O$ und $K_2O$ allein zufriedenstellende Ergebnisse erzielen lassen. Ein bevorzugter Bereich für den Gehalt an $K_2O$ liegt zwischen 0,2 und 13 Gew.-%, da einerseits ein Gehalt von $K_2O$ sich positiv auf das Schmelzverhalten auswirkt, andererseits aber sehr hohe $K_2O$-Gehalte zu einem Ansteigen des thermischen Ausdehnungskoeffizienten führen.

Der Gesamtgehalt an Erdalkalioxiden plus Zinkoxid soll unter 5 Gew.-% liegen, um einerseits eine ausreichende Schmelzbarkeit des Glases, andererseits gute optische Eigenschaften (scharfe Absorptionskante) zu erhalten. Der Erdalkaligehalt wird dabei wesentlich durch MgO bestimmt, das in Mengen von 2,5 bis 4,9 Gew.-% in dem Glas vorliegen kann. D.h., daß praktisch der gesamte Gehalt an RO aus MgO bestehen kann. Bevorzugt wird ein Gehalt an MgO von 2,8 bis 4,8 Gew.-%. Die übrigen Erdalkalioxide und Zinkoxide können in Mengen von bis zu 2,5 Gew.-% vorliegen. Bevorzugt wird jedoch ein CaO-Gehalt von bis zu 2 Gew.-%, ein SrO-Gehalt von bis zu 1,5 Gew.-%, ein BaO-Gehalt von bis zu 2,2 Gew.-% und ein ZnO-Gehalt von bis zu 1,5 Gew.-%.

2

Das Glas kann ferner bis zu 2 Gew.-% $SiO_2$ enthalten. Durch $SiO_2$ läßt sich sowohl die gewünschte scharfe Absorption mit einer steilen Absorptionskante im IR-Bereich, als auch die Witterungsbeständigkeit positiv beeinflussen. Bevorzugt werden $SiO_2$-Gehalte von 0,5 bis 2 Gew.-%.

Für die Absorption im IR-Bereich ist der CuO-Gehalt von bis zu 7,5 Gew.-%, insbesondere von 2,1 bis 6,5 Gew.-% wesentlich. Es konnte ferner gefunden werden, daß ein Zusatz von 0,001 bis 0,5 Gew.-% $V_2O_5$ die Steilheit der Absorptionskante im IR außerordentlich positiv beeinflußt und daher ein wesentliches Element der Erfindung darstellt. Da bei hohen $V_2O_5$-Gehalten eine Absorption im Sichtbaren auftreten kann, wird ein Zusatz von 0,001 bis 0,1 Gew.-%, insbesondere von 0,001 bis 0,05 Gew.-% $V_2O_5$ bevorzugt. Die Gesamtmenge an CuO und $V_2O_5$ soll jedoch 7,5 Gew-% nicht überschreiten.

Für die Absorption im IR-Bereich ist das Vorliegen von Kupferionen in der Wertigkeitsstufe +2 und von Vanadiumionen in der Wertigkeitsstufe +5 maßgebend. Das Glas wird daher bevorzugt in an sich bekannter Weise unter oxidierenden Bedingungen erschmolzen. Das kann z.B. durch Zugabe von Nitraten zu dem Gemenge erreicht werden. Gute Ergebnisse erzielt man durch Mengen von bis zu 5,5 Gew.-% $NO_3^-$-Ionen, insbesondere 1,5 bis 5,5 Gew.-% $NO_3^-$-Ionen, bezogen auf das fertige Glas. Zur Stabilisierung der hohen Oxidationsstufen ist es ferner bevorzugt, wenn das Glas Oxidationsmittel wie $MnO_2$, $CrO_2$ oder $CeO_2$ enthält. Der Zusatz von $CeO_2$ ist bevorzugt, weil dadurch eine häufig erwünschte Absorption im nahen UV-Bereich erzielt werden kann. $CeO_2$ kann in Mengen von bis zu 3 Gew.-%, bevorzugt in Mengen von 0,05 bis 2,5 Gew.-% in dem Glas vorhanden sein, $MnO_2$ in Mengen von bis zu 3 Gew.-%, bevorzugt in Mengen von bis zu 1 Gew.-% und $Cr_2O_3$ in Mengen von bis zu 0,5 Gew.-%, bevorzugt von bis zu 0,1 Gew.-%. Da $Cr_2O_3$ im sichtbaren Bereich des Spektrums Absorptionen hervorruft, wird es nur in seltenen Fällen zur Anwendung kommen. Die Gesamtmenge an den Oxidationsmitteln $CeO_2$, $MnO_2$ und $Cr_2O_3$ soll 5,5 Gew.-% nicht überschreiten, bevorzugt wird ein Gesamtgehalt von nicht mehr als 3 Gew.-%.

Falls erforderlich, kann das Glas noch mit üblichen Läutermitteln, z.B. $As_2O_3$, $Sb_2O_3$, Halogen wie $F^-$ oder $Cl^-$, oder $SO_3$ geläutert werden. Es ist dabei jedoch zu beachten, daß die Läutermittel die Gleichgewichtslage zwischen dem höherwertigen und dem niedrigerwertigen Zustand bei Ionen, die in mehreren Oxidationsstufen vorkommen können, z.B. Cu-, Ce- und V-Ionen in Richtung auf den niedriger wertigen Zustand beeinflussen. Insbesondere bei der Läuterung unter Verwendung von Halogen ($Cl^-$ oder $F^-$) oder $Sb_2O_3$ ist das der Fall. Die Konzentration der färbenden Ionen, der Oxidationsmittel und der Läutermittel ist daher zur Erzielung optimaler Ergebnisse aufeinander abzustimmen, was ggfls. anhand einiger einfacher Probeschmelzen geschehen kann.

Normalerweise erzielt man günstige Ergebnisse bei Verwendung von $As_2O_3$, $Sb_2O_3$ und $SO_3$ in Mengen von jeweils bis zu 0,3 Gew.-% und von Halogenid ($Cl^-$, $F^-$) in Mengen von bis zu 0,5 Gew.-%, jedoch soll die zugegebene Menge an Läutermittel insgesamt 0,8 Gew.-% nicht überschreiten, wobei normalerweise eine Menge von maximal 0,5 Gew.-% ausreicht. Bevorzugt wird weiterhin die Läuterung mit $As_2O_3$ allein oder im Kombination mit anderen Läutermitteln. Es ist auch noch darauf hinzuweisen, daß $CeO_2$ ein bekanntes Läutermittel ist, so daß dieses bei Vorhandensein ebenfalls läuternd wirken kann.

Beispiele

Es wurden 8 Gläser erschmolzen, deren Zusammensetzung in Gew.-% auf Oxidbasis in der Tabelle angeführt ist, von denen die Transmission $\tau$ (incl. Reflexionsverluste) bei 400 nm, 550 nm und 650 nm an 1 mm dicken Proben gemessen wurde. Ferner wurde der Ausdehnungskoeffizient $\alpha$ 200-300 $\cdot 10^7 \cdot K^{-1}$ für den Bereich 20 - 300°C angegeben. Zur Bestimmung der Witterungsbeständigkeit $\Delta \tau$ wurden 1 mm dicke Proben 20 Tage bei 40°C und einer relativen Luftfeuchtigkeit von 90 % gelagert und die Transmission bei 400 nm vor und nach der Lagerung gemessen. Die prozentuale Abweichung der beiden vor und nach der Lagerung gemessenen Transmissionswerte voneinander ist ein Maß für die Witterungsbeständigkeit. Beispiel 8 ist ein Vergleichsbeispiel, aus dem hervorgeht, daß bei Überschreitung des Gesamtwertes von 7,5 Gew.-% für den CuO + $V_2O_5$-Gehalt bereits eine Eigenfärbung im Glas auftreten kann.

3

Tabelle 1

| Beispiel Nr.: | 1 | 2 | 3 | 4 |
|---|---|---|---|---|
| $P_2O_5$ | 70.745 | 69.00 | 68.85 | 67.07 |
| $Al_2O_3$ | 11,0 | 13,0 | 9,0 | 8,6 |
| $B_2O_3$ | 4,5 | 4,05 | 4,0 | 3,8 |
| $Li_2O$ | – | – | – | – |
| $Na_2O$ | 0,9 | 0,8 | – | – |
| $K_2O$ | 3,1 | 3,4 | 11,0 | 14,0 |
| MgO | 2,8 | 2,8 | 4,5 | 2,8 |
| CaO | 2,0 | – | – | – |
| SrO | – | – | – | – |
| BaO | – | 2,2 | – | – |
| ZnO | 0,1 | – | – | – |
| CuO | 2,1 | 2,1 | 2,4 | 2,4 |
| $V_2O_5$ | 0,005 | 0,05 | 0,005 | 0,03 |
| $CeO_2$ | 0,1 | 0,5 | 0,1 | 0,5 |
| $MnO_2$ | 0,25 | 1,10 | – | 0,5 |
| $Cr_2O_3$ | – | 0,05 | – | – |
| $As_2O_3$ | 0,3 | – | 0,15 | – |
| $Sb_2O_3$ | – | – | – | 0,3 |
| $SO_3$ | 0,1 | 0,3 | – | – |
| Cl | – | – | – | – |
| $SiO_2$ | 2,0 | 0,20 | – | – |
| F | – | 0,50 | – | – |
| $\tau$* 400 nm, 1 mm | 85,2 | 83,9 | 85,0 | 86,2 |
| $\tau$ 550 nm, 1 mm | 85,1 | 86,8 | 84,5 | 85,0 |
| $\tau$ 650 nm, 1 mm | 36,4 | 34,1 | 33,0 | 34,2 |
| $\alpha$ +20/+300 $\times 10^{-7}$ /K | 80,2 | 82,9 | 98,4 | 100,0 |
| Witterungs-beständigkeit (20 Tage, 40°C, 90 % Luftfeuchte) $\Delta\tau$ 400 nm (vor und nach Klimatest) | 1 % | 0 % | 0,5 % | 1 % |

$\tau$* = Transmission (inclusive Reflexionsverluste)

T a b e l l e   1   (Fortsetzung)

| Beispiel Nr.: | 5 | 6 | 7 | 8 |
|---|---|---|---|---|
| $P_2O_5$ | 67,10 | 67,03 | 76,4 | 67,00 |
| $Al_2O_3$ | 13,0 | 10,5 | 7,7 | 9,0 |
| $B_2O_3$ | 5,5 | 4,5 | – | 4,5 |
| $Li_2O$ | 2,5 | – | – | – |
| $Na_2O$ | 1,5 | 4,0 | 2,8 | 6,0 |
| $K_2O$ | 0,8 | – | 0,2 | 0,3 |
| MgO | 2,8 | 3,2 | 2,7 | 2,8 |
| CaO | 0,2 | – | 0,2 | – |
| SrO | 1,5 | – | – | – |
| BaO | – | – | 0,6 | – |
| ZnO | – | 1,5 | 0,6 | – |
| CuO | 3,8 | 4,4 | 5,5 | 7,5 |
| $V_2O_5$ | 0,01 | 0,02 | 0,025 | 0,1 |
| $CeO_2$ | 1,1 | 2,5 | 1,8 | 1,8 |
| $MnO_2$ | 0,04 | 0,2 | – | 0,2 |
| $Cr_2O_3$ | – | 0,1 | – | – |
| $As_2O_3$ | 0,05 | – | 0,14 | 0,05 |
| $Sb_2O_3$ | – | – | – | – |
| $SO_3$ | – | 0,3 | – | – |
| Cl | 0,1 | 0,05 | – | 0,2 |
| $SiO_2$ | – | 1,4 | 1,2 | 0,35 |
| F | – | 0,30 | 0,14 | 0,20 |
| $\tau$* 400 nm, 1 mm | 79,8 | 77,2 | 72,5 | 51,2 |
| $\tau$ 550 nm, 1 mm | 83,4 | 82,6 | 81,0 | 73,5 |
| $\tau$ 650 nm, 1 mm | 22,8 | 19,0 | 12,1 | 4,0 |
| $\alpha$ +20/+300 $\times 10^{-7}$ /K | 90,2 | 88,5 | 87,9 | 93,4 |
| Witterungs-beständigkeit (20 Tage, 40°C, 90 % Luftfeuchte) $\Delta\tau$ 400 nm (vor und nach Klimatest) | 1,5 % | 1 % | 1,8 % | 1,5 % |

$\tau$ * = Transmission (inclusive Reflexionsverluste)

**Patentansprüche**

1. Kupfer (II) -oxid-haltiges Alumophosphatglas mit niedriger Transmission im IR-Bereich, **gekennzeichnet durch** eine Zusammensetzung (in Gew.-% auf Oxidbasis) von

| | | | | | | | |
|---|---|---|---|---|---|---|---|
| $P_2O_5$ | 67 | – | 77 | MgO | 2,5 | – | 4,9 |
| $Al_2O_3$ | 8 | – | 13 | CaO | 0 | – | 2,5 |
| $B_2O_3$ | 0 | – | 5,5 | SrO | 0 | – | 2,5 |
| $SiO_2$ | 0 | – | 2,1 | BaO | 0 | – | 2,5 |
| $Li_2O$ | 0 | – | 2,5 | ZnO | 0 | – | 2,5 |
| $Na_2O$ | 0 | – | 6 | $\lessgtr$ RO | | < 5 | |
| $K_2O$ | 0 | – | 14 | CuO | 2 | – | 7,5 |
| $Rb_2O$ | 0 | – | 2,5 | $V_2O_5$ | 0,001 | – | 0,5 |
| $Cs_2O$ | 0 | – | 2,5 | $\lessgtr$ CuO + $V_2O_5$ | 2 | – | 7,5 |
| $\lessgtr$ $R_2O$ | 3 | – | 14 | | | | |

sowie ggfls. übliche Läutermittel.

2. Alumophosphatglas nach Anspruch 1, **gekennzeichnet durch** einen Gehalt an $P_2O_5$ von 69 - 75 Gew.-%

3. Alumophosphatglas nach Anspruch 1 oder 2, **gekennzeichnet durch** einen Gehalt an $K_2O$ von 0,2 - 13 Gew.-%.

4. Alumophosphatglas nach wenigstens einem der Ansprüche 1 - 3, **gekennzeichnet durch** einen Gehalt von

| | | | | |
|---|---|---|---|---|
| MgO | 2,8 | – | 4,8 | Gew.-% |
| CaO | 0 | – | 2 | Gew.-% |
| SrO | 0 | – | 1,5 | Gew.-% |
| BaO | 0 | – | 2,2 | Gew.-% |
| ZnO | 0 | – | 1,5 | Gew.-% |

5. Alumophosphatglas nach wenigstens einem der Ansprüche 1 - 4, **gekennzeichnet durch** einen Gehalt von

| | | | | |
|---|---|---|---|---|
| $CeO_2$ | 0 | – | 3,0 | Gew.-% |
| $MnO_2$ | 0 | – | 3,0 | Gew.-% |
| $Cr_2O_3$ | 0 | – | 0,5 | Gew.-% |

insgesamt jedoch nicht mehr als 5,5 Gew.-%.

6. Alumophosphatglas nach wenigstens einem der Ansprüche 1 - 5, **gekennzeichnet durch**

einen Gehalt an Läutermitteln von

$$
\begin{array}{lllll}
As_2O_3 & 0 & - & 0,3 & Gew.-\% \\
Sb_2O_3 & 0 & - & 0,3 & Gew.-\% \\
SO_3 & 0 & - & 0,3 & Gew.-\% \\
Halogenid\ (Cl,F) & 0 & - & 0,5 & Gew.-\%
\end{array}
$$

jedoch insgesamt nicht mehr als 0,8 Gew.-%

7. Alumophosphatglas nach wenigstens einem der Ansprüche 1 - 6,
   **gekennzeichnet durch**
   einen Gehalt von $SiO_2$ 0,2 - 2 Gew.-%

8. Alumophosphatglas nach wenigstens einem der Ansprüche 1 - 7,
   **gekennzeichnet durch**
   einen Gehalt von 0,001 - 0,1 Gew.-% $V_2O_5$

9. Alumophosphatglas nach wenigstens einem der Ansprüche 1 - 8,
   gekennzeichnet durch
   einen Gehalt von 0,001 - 0,05 Gew.-% $V_2O_5$

## Claims

1. An aluminophosphate glass containing copper (II) oxide, having a low transmission in the infrared range, characterized by a composition in % by weight on an oxide basis, of

$$
\begin{array}{llll} \qquad
\begin{array}{lllll}
P_2O_5 & 67 & - & 77 \\
Al_2O_3 & 8 & - & 13 \\
B_2O_3 & 0 & - & 5,5 \\
SiO_2 & 0 & - & 2,1 \\
Li_2O & 0 & - & 2,5 \\
Na_2O & 0 & - & 6 \\
K_2O & 0 & - & 14 \\
Rb_2O & 0 & - & 2,5 \\
Cs_2O & 0 & - & 2,5 \\
\Sigma R_2O & 3 & - & 14
\end{array}
&
\begin{array}{lllll}
MgO & 2,5 & - & 4,9 \\
CaO & 0 & - & 2,5 \\
SrO & 0 & - & 2,5 \\
BaO & 0 & - & 2,5 \\
ZnO & 0 & - & 2,5 \\
\Sigma RO & & < & 5 \\
CuO & 2 & - & 7,5 \\
V_2O_5 & 0,001 & - & 7,5 \\
\Sigma CuO+V_2O_5 & 2 & - & 7,5
\end{array}
\end{array}
$$

and optionally customary fining agents.

2. An aluminophosphate glass according to claim 1 or 2, characterized by a content of $P_2O_5$ of 69 - 75 % by weight.

3. An aluminophosphate glass according to claim 1, characterized by a content of $K_2O$ of 0,2 - 13 % by weight.

4. An aluminophosphate glass according to at least one of the claims 1 to 3 characterized by a content of

```
Mgo    2,8  -  4,8 wt.%
CaO    0    -  2   wt.%
SrO    0    -  1,5 wt.%
BaO    0    -  2,2 wt.%
ZnO    0    -  1,5 wt.%.
```

5. An aluminophosphate glass according to at least one of the claims 1 to 4 characterized by a content of

```
CeO2   0    -  3,0 wt.%
MnO2   0    -  3,0 wt.%
Cr2O3  0    -  0,5 wt.%
```

but totaling no more than 5,5 % by weight.

6. An aluminophosphate glass according to at least one of the claims 1 to 5 characterized by a content of fining agents of

```
As2O3       0    -  0,3 wt.%
Sb2O3       0    -  0,3 wt.%
SO3         0    -  0,3 wt.%
halide (Cl, F) 0  -  0,5 wt.%
```

but totaling nor more than 0,8 % by weight.

7. An aluminophosphate glass according to at least one of the claims 1 to 6 characterized by a content of $SiO_2$ of 0,2 - 2 % by weight.

8. An aluminophosphate glass according to at least one of the claims 1 to 7 characterized by a content of $V_2O_5$ of 0,001 - 0,1 % by weight.

9. An aluminophosphate glass according to at least one of the claims 1 to 8 characterized by a content of $V_2O_5$ of 0,001 - 0,05 % by weight.

**Revendications**

1. Verre d'aluminophosphate à faible transmission dans le domaine IR, contenant l'oxyde cuivrique, caractérisé par une composition en pourcents du poids de

| | | | | | | |
|---|---|---|---|---|---|---|
| $P_2O_5$ | 67 | - | 77 | MgO | 2,5 | - 4,9 |
| $Al_2O_3$ | 8 | - | 13 | CaO | 0 | - 2,5 |
| $B_2O_3$ | 0 | - | 5,5 | SrO | 0 | - 2,5 |
| $SiO_2$ | 0 | - | 2,1 | BaO | 0 | - 2,5 |
| $Li_2O$ | 0 | - | 2,5 | ZnO | 0 | - 2,5 |
| $Na_2O$ | 0 | - | 6 | $\Sigma RO$ | | < 5 |
| $K_2O$ | 0 | - | 14 | CuO | 2 | - 7,5 |
| $Rb_2O$ | 0 | - | 2,5 | $V_2O_5$ | 0,001 | - 0,5 |
| $Cs_2O$ | 0 | - | 2,5 | $\Sigma CuO + V_2O_5$ | 2 | - 7,5 |
| $\Sigma R_2O$ | 3 | - | 14 | | | |

ainsi que des agents d'affinage courants.

2. Verre d'aluminophosphate selon la revendication 1, caractérisé par une teneur en $P_2O_5$ de 69 - 75 % en poids.

3. Verre d'aluminophosphate selon la revendication 1 ou 2, caractérisé par une teneur en $K_2O$ de 0,2 - 13 % en poids.

4. Verre d'aluminophosphate selon l'une au moins des revendications 1 à 3, caractérisé par une teneur

| | | | | |
|---|---|---|---|---|
| MgO | 2,8 | - | 4,8 | % en poids |
| CaO | 0 | - | 2 | % en poids |
| SrO | 0 | - | 1,5 | % en poids |
| BaO | 0 | - | 2,2 | % en poids |
| ZnO | 0 | - | 1,5 | % en poids |

5. Verre d'aluminophosphate selon l'une au moins des revendications 1 à 4, caractérisé par une teneur de

| | | | | |
|---|---|---|---|---|
| $CeO_2$ | 0 | - | 3,0 | % en poids |
| $MnO_2$ | 0 | - | 3,0 | % en poids |
| $Cr_2O_3$ | 0 | - | 0,5 | % en poids |

la teneur totale de ces éléments ne dépassant cependant pas 5,5 % en poids.

6. Verre d'aluminophosphate selon l'une au moins des revendications 1 à 5, caractérisé par une teneur en agents d'affinage de

| | | | | |
|---|---|---|---|---|
| $As_2O_3$ | 0 | - | 0,3 | % en poids |
| $Sb_2O_3$ | 0 | - | 0,3 | % en poids |
| $SO_3$ | 0 | - | 0,3 | % en poids |
| Halogénure (Cl, F) | 0 | - | 0,5 | % en poids |

la teneur totale de ces éléments ne dépassant cependant pas 0,8 % en poids.

7. Verre d'aluminophosphate selon l'une au moins des revendications 1 à 6, caractérisé par une teneur en

$SiO_2$ de 0,2 - 2 % en poids.

8. Verre d'aluminophosphate selon l'une au moins des revendications 1 à 7, caractérisé par une teneur en $V_2O_5$ de 0,001 - 0,1 % en poids.

9. Verre d'aluminophosphate selon l'une au moins des revendications 1 à 8, caractérisé par une teneur en $V_2O_5$ de 0,001 - 0,05 % en poids.